Europäisches Patentamt

(19) European Patent Office

Office européen des brevets

(11) Publication number: **0 026 097**
**A1**

(12) # EUROPEAN PATENT APPLICATION

(21) Application number: **80303317.4**

(22) Date of filing: **22.09.80**

(51) Int. Cl.³: **A 01 B 63/02**
**A 01 B 13/08, E 02 F 5/10**

(30) Priority: **20.09.79 GB 7935371**
**24.03.80 GB 8009853**
**24.03.80 GB 8009877**

(43) Date of publication of application:
**01.04.81 Bulletin 81/13**

(84) Designated Contracting States:
**DE FR GB IT NL**

(71) Applicant: **Tuckwell, Kenneth Roger**
**Grundisburgh**
**Woodbridge Suffolk IP13 6TJ(GB)**

(72) Inventor: **Tuckwell, Kenneth Roger**
**Grundisburgh**
**Woodbridge Suffolk IP13 6TJ(GB)**

(74) Representative: **Coleman, Stanley et al,**
**MATHYS & SQUIRE 10 Fleet Street**
**London EC4Y 1AY(GB)**

(54) Agricultural implement and method of lifting same.

(57) An agricultural implement and particularly a mole drainer has a mounting frame (12) connected to a tractor three point linkage and a beam arrangement (2) pivotally connected to the mounting frame about a transverse pivot axis (14). The beam arrangement slides over the ground in use and holds the mole boring device (34) at a well regulated depth. A normally slack chain (40) or other linkage extends from the top of the mounting frame to the rear of the beam arrangement. On lifting by the tractor linkage, the beam arrangement is first tilted causing the mole boring device to rise to the surface then as the chain is brought into tension the beam arrangement is lifted bodily from the ground.

./...

*Fig 1*

AGRICULTURAL IMPLEMENT AND METHOD OF LIFTING SAME

This invention relates to agricultural implements and in one particular example to mole drainers.

Hitherto, mole draining has been carried out using either mole drainer attachments fully mounted on a tractor or trailed mole drainers which usually have the mole depending from the rearward end of a longitudinal beam which slides over the ground. Fully mounted mole drainer attachments are generally unsatisfactory since each time the tractor wheels ride over a ridge in the ground, a kink is introduced into the mole drain being bored and proper drainage is prevented. Conventional trailed mole drainers require large tractors and are difficult to manoeuvre at the headlands where the mole boring device has to be lifted out of the ground.

It is one object of this invention to provide an improved mole drainer which is easily manoeuvrable and which has a performance comparable with beam mounted trailed machines. The invention further provides a method of lifting a mole drainer out of work, which method reduces significantly the power required to be provided by the tractor.

Aside from mole drainers, there are other agricultural implements for which an accurately controlled depth of working is very important; an example being cultivators employed in minimum cultivation techniques. There have hitherto been difficulties in providing a sufficiently accurate depth control for this type of implement. The working depth of a semi-mounted implement is usually governed by a depth wheel arrangement provided alongside the tool but the depth wheel will of course follow ridges or troughs in the ground and most of this movement is transmitted to the tool. With fully mounted implements, the situation is worse since the tool will rise and fall with the tractor wheels. A trailed implement does not suffer from the problem to any large extent since the tool can be mounted on the frame of the implement between front and rear ground wheels and is thus relatively insensitive to local variations in ground level at any wheel. The working depth of the tool is in fact controlled relative to an average ground level over the wheel base of the trailed implement. The disadvantage with trailed implements is that tight turns at the headlands are not possible and transport to and from work is difficult.

It is a further object of this invention to provide an improved agricultural implement bearing, for example, cultivating tools which implement can be semi-mounted on the three point linkage of a tractor but which has in use depth control characteristics at least as good as those of trailed implements.

Accordingly the present invention consists in one aspect in an agricultural implement comprising an elongate beam arrangement adapted for pivotal connection at a forward end thereof to the lower links of a tractor three point linkage for pivotal movement relative to the tractor about a transverse axis, the beam arrangement being arranged in use to slide over the ground, tool means mounted on the beam arrangement and means serving to limit pivotal movement of the beam arrangement about said transverse axis such that upon initial lifting of the tractor linkage the beam arrangement is inclined forwardly and upwardly until said limit of pivotal movement is reached, continued lifting of the tractor linkage then serving to lift the beam arrangement bodily from the ground.

In one form of the invention, the tool means comprises a mole boring device rigidly supported at a working depth beneath the rear of the beam arrangement, the mole boring device being caused to move toward the surface by said forward and upward inclination of the beam arrangement upon initial lifting of the tractor linkage.

Preferably, the means serving to limit pivotal movement of the beam arrangement about said transverse axis comprises link means extending in use between the tractor top link and the beam arrangement.

Advantageously, the implement further comprises a mounting frame pivotally connected to the forward end of the beam arrangement for movement relative thereto about a transverse axis, the mounting frame being adapted for connection to the tractor top link and the means serving to limit pivotal movement of the beam arrangement about the transverse axis preferably comprising link means extending between an upper location in the mounting frame and a rearward location in the beam arrangement.

Suitably, the link means comprises a chain which is slack when the mounting frame and beam arrangement are mutually orthogonally disposed.

In a further aspect the present invention consists in a method of lifting out of work a mole drainer having a mole boring device rigidly mounted beneath an elongate beam arrangement which is drawn over the ground by a tractor, comprising the steps of lifting the forward end of the beam arrangement thereby tilting the mole boring device forwardly and upwardly; continuing forward motion of the tractor until such time as the mole boring device reaches or closely approaches the surface and thereafter lifting the beam arrangement bodily from the ground.

In yet a further aspect the present invention consists in an agricultural implement comprising an elongate beam arrangement adapted for pivotal connection at a forward end thereof to the lower links of a tractor three point linkage for pivotal movement relative to the tractor about a transverse axis, the beam arrangement being arranged in use to slide over the ground; tool mounting means secured to the beam arrangement to enable different tools to be mounted on the implement and means extending in use between the beam arrangement and the tractor top link to enable lifting of the tool carrier by the tractor hydraulic system.

The invention will now be described by way of example with reference to the accompanying drawings in which:-

Figure 1 is a side view of a mole drainer according to the present invention,

Figure 2 is a front view of the mole drainer shown in Figure 1,

Figure 3 is a plan view of the mole drainer shown in Figure 1,

Figure 4 is a side view of an agricultural implement according to the present invention in the form of a tool carrier,

Figure 5 is a plan view of the tool carrier of Figure 4 showing somewhat diagrammatically a cultivating tool frame mounted on the carrier, and

Figure 6 is a front view of the tool carrier and cultivator tool frame of Figure 5, showing the frame folded into a transport position.

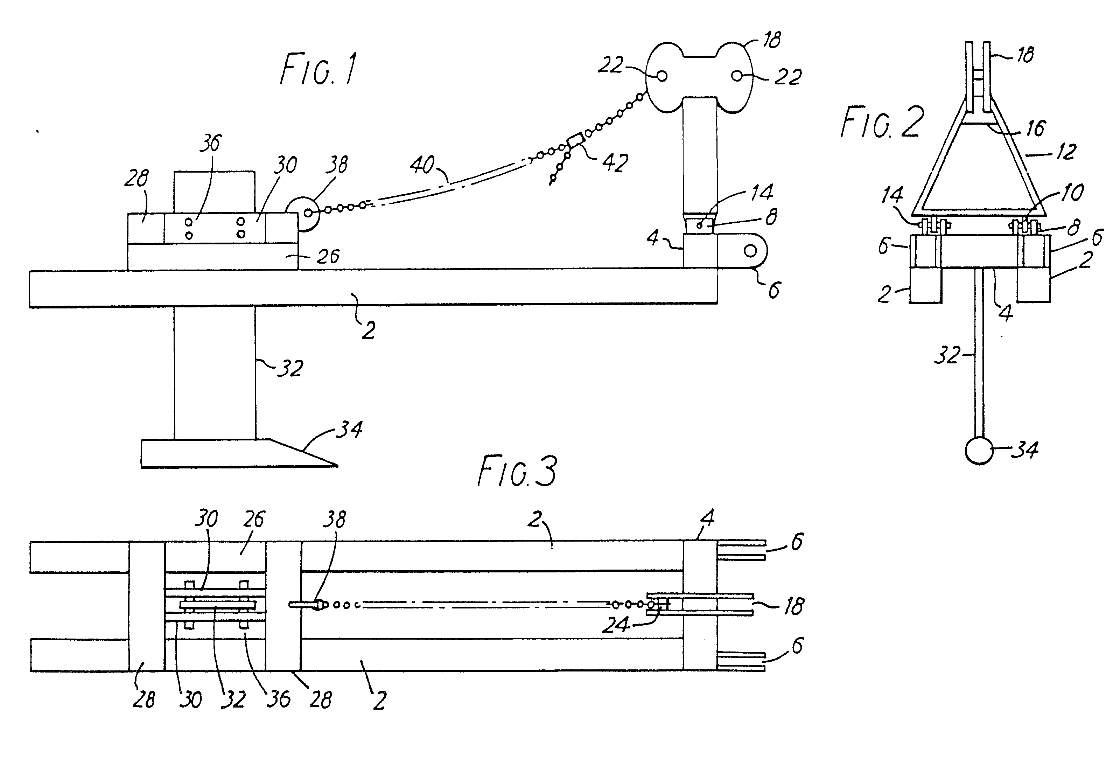

The mole drainer shown in Figures 1, 2 and 3 of the drawings comprises a pair of spaced parallel beams 2 connected together at their forward ends by a forward cross member 4. At each end of the forward cross member 4 there is provided a pair of forwardly directed plates 6 apertured to receive a corresponding transverse pin (not shown). The lower links of a tractor three point linkage are in use located and pinned respectively between the pairs of plates. The forward cross member 4 is further provided with two pairs of upstanding lugs 8 arranged to receive corresponding lugs 10 which depend from the base of a triangular mounting frame 12. A pin 14 is passed through each pair of lugs 8 and the associated lug 10 to connect mounting frame 12 pivotally to the cross member 4. At the apex of the mounting frame 12, there are formed integrally a strengthening web 16 and spaced connecting plates 18. The connecting plates are provided with aligned forward apertures 20 to enable connection of the tractor top link and with aligned rear apertures 22 holding a transverse pin 24 for the purpose described hereinafter.

Towards the rear of each beam 2 there is provided a block 26 and resting upon these blocks are two parallel cross members 28 which extend between the beams. At their mid-length, the two rear cross members 28 are connected by spaced vertical plates 30 which between them support the blade 32 which carries at its lower end the mole boring device 34. The blade is secured to the vertical plates 26 by a series of bolts 36 with additional bolt holes being provided to enable the working depth of the mole boring device 34 to be adjusted.

The foremost of the pair of rear cross members 28 is formed with an eye 38 to which is connected one end of a chain 40, the other end of the chain being connected by pin 24 in rear apertures 22 of the mounting frame. The chain includes a length adjusting device 42 of any convenient form.

In the working position, the chain 40 is slack, as shown in Figure 1, and the beam arrangement comprising beams 2 and cross members 4 and 28 can articulate relative to the tractor about the transverse axis of pins 14. The mole boring device 34 is maintained at a constant depth beneath ground level as averaged over the length of the beams and sudden kinks in the mole being bored are avoided. At the headlands, once the mole being bored has intersected the peripheral permanent drain, the tractor three point linkage is activated to lift the mounting frame 12 together with the forward end of the beam arrangement. Since the claim 34 is slack, the rearward end of the beam arrangement is not lifted and the beams 2 are inclined forwardly and upwardly. In the same way, the mole boring device 34 is inclined forwardly and upwardly and continued movement of the tractor causes the device 34 to rise to the surface. The tractor linkage can then be lifted further with the chain 40 coming under tension and the beam arrangement being lifted bodily from the ground. Since the hydraulic lifting mechanism of the tractor is not required to lift the mole boring device directly from its working position beneath the ground, the described mole drainer can be used with comparatively small tractors whilst still preserving sufficient length in the beam to provide satisfactory stability of depth control.

A further advantage of the described mole drainer is that if the going should become too hard it is possible to lift the front of the beam arrangement slightly to cause an instantaneous change in the angle of the mole boring device 34 with a corresponding instantaneous draft reduction. The depth of the mole being bored will decrease as a result of this manoeuvre but the mole will remain continuous. Conventional mole drainers can only alter depths by lifting the blade and mole boring device relatively to the supporting frame, this breaking the mole without giving an instantaneous draft reduction.

The described beam arrangement of a pair of spaced beams interconnected by cross members gives stability and has the merit of simplicity. It could however be replaced by other arrangements such as a single beam perhaps provided with stabilising outriggers. Similarly, the described chain 40 provides a simple way of limiting relative movement between the mounting frame 12 and the beam arrangement but other mechanisms such as a toggle or slotted links could be provided. With a different form of link means, the described triangular mounting frame could take other shapes and indeed could in certain circumstances be omitted, the link means being then connected directly to the tractor top link. It will be appreciated that the function of the link means is to limit pivotal movement of the beam arrangement with respect to the mounting frame or tractor linkage and in certain cases it will be possible for this function to be performed by other mechanisms. Thus, for example, the pivotal connection between the beam arrangement and the mounting frame could include a ratchet device which locks after a predetermined angular movement of the beam arrangement relative to the frame.

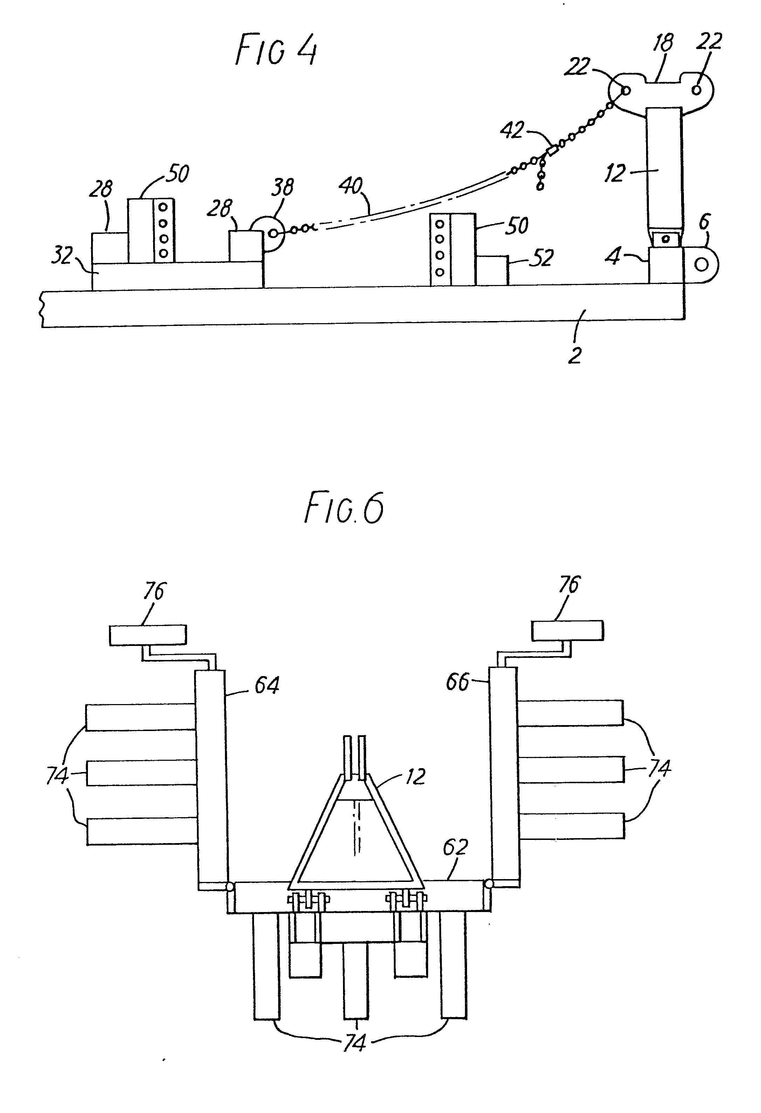

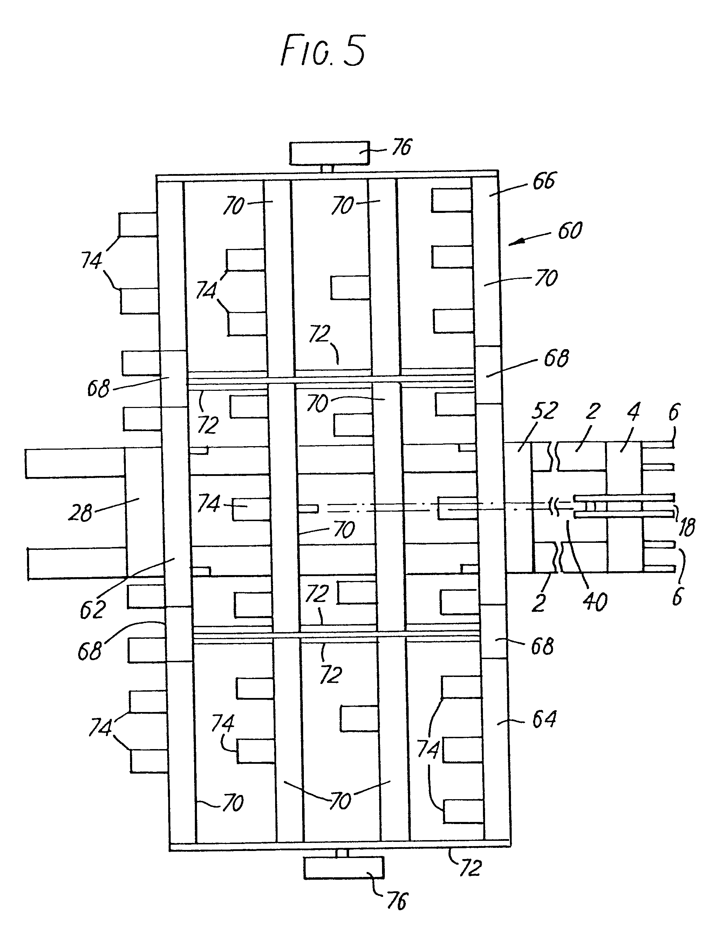

Referring now to Figure 4, there is shown a tool carrier which is similar in construction to the mole drainer previously described. Where appropriate, the same reference numerals have been employed and the structure will be described in detail only in those respects in which it differs from the mole drainer.

In place of the vertical plates 30 supporting the blade 32 and mole boring device 34 of the mole drainer, the tool carrier is provided at opposite ends of the rear cross member 28 with upstanding mounting brackets 50. Towards the front of the implement, the beams 2 are connected by an intermediate cross member 52 having a further pair of upstanding brackets 50 mounted one at each end thereof. The four mounting brackets 50 enable a variety of tools such as cultivators, sub-soilers, riggers and harrows to be mounted on the carrier. Both the depth and the inclination of the tool relative to the carrier can be adjusted by suitable choice of bolt holes in the mounting brackets.

The manner in which the described tool carrier is used and in particular the manner in which the carrier is lifted from the ground, is analogous with the mole drainer and will not be further described. It will be appreciated that the tool carrier has the advantages of a trailed implement whilst in the working position, that is to say superior depth control and front to back stability, but also retains the advantages of a mounted machine for transport and manoeuvring at the headlands.

Referring now to Figures 5 and 6, there is shown, somewhat diagrammatically, a cultivating tool frame 60 mounted on the tool carrier. The cultivating tool frame 60 comprises a central section 62 which is bolted at the appropriate height to mounting brackets 50, and wing sections 64 and 66 which are connected to the central section 62 on opposite lateral sides thereof through hinges 68. Each section of the cultivating tool is constructed of four transverse members 70 extending.in parallel between end plates 72. Cultivating tines shown schematically at 74 are mounted in any convenient manner upon the transverse members 70. At each side of the tool frame, there is provided a support wheel 76 mounted upon the end plate 72.

The working position of the implement is shown in Figure 5 and the implement can be lifted from this position by means of the two stage lifting procedure described in relation to the mole drainer. For transport purposes, the two wing sections of the cultivating tool frame can be swung upwardly about their inner ends to reduce the transport width of the implement as shown in Figure 6.

It is a straightforward operation to unbolt the cultivator tool frame from the mounting brackets 50 and to replace it on the tool carrier with a different tool.

It should be understood that the described mounting brackets represent merely one example of means for mounting one of a variety of tools upon the tool carrier. Similarly, the described beam arrangement formed of parallel longitudinal beams spaced by a plurality of cross members could be replaced by other arrangements and means apart from the chain 40 could be provided to enable bodily lifting of the tool carrier.

CLAIMS:

1.      An agricultural implement comprising an elongate beam arrangement adapted for pivotal connection at a forward end thereof to the lower links of a tractor three point linkage for pivotal movement relative to the tractor about a transverse axis, the beam arrangement being arranged in use to slide over the ground, tool means mounted on the beam arrangement and means serving to limit pivotal movement of the beam arrangement about said transverse axis such that upon initial lifting of the tractor linkage the beam arrangement is inclined forwardly and upwardly until said limit of pivotal movement is reached, continued lifting of the tractor linkage then serving to lift the beam arrangement bodily from the ground.

2.      An agricultural implement according to Claim 1, wherein said tool means comprises a mole boring device rigidly supported at a working depth beneath the rear of the beam arrangement, the mole boring device being caused to move toward the surface by said forward and upward inclination of the beam arrangement upon initial lifting of the tractor linkage.

3.      An agricultural implement according to Claim 1 or Claim 2, wherein said means serving to limit pivotal movement of the beam arrangement about said transverse axis comprises link means extending in use between the tractor top link and the beam arrangement.

4.      An agricultural implement according to Claim 1 or Claim 2, further comprising a mounting frame pivotally connected to the forward end of the beam arrangement for movement relative thereto about a transverse axis, the mounting frame being adapted for connection to the tractor top link.

5.      An agricultural implement according to Claim 4, wherein said means serving to limit pivotal movement of the beam arrangement about the transverse axis comprises link means extending between an upper location in the mounting frame and a rearward location in the beam arrangement.

6.      An agricultural implement according to Claim 5, wherein the link means comprises a chain which is slack when the mounting frame and beam arrangement are mutually orthogonally disposed.

7.      An agricultural implement according to Claim 4, wherein the mounting frame is of triangular configuration having its apex adapted for connection to the tractor top link and its base pivotally connected to the beam arrangement.

8.      An agricultural implement according to Claim 1 or Claim 2, wherein the beam arrangement comprises a pair of spaced parallel beams connected toward their rearward ends by a transverse support member providing a mounting for said tool means.

9.      A mole drainer comprising a mounting frame adapted for connection to the three point linkage of a tractor; a beam arrangement pivotally connected at a forward end thereof to the mounting frame for pivotal movement relative thereto about a transverse axis, the beam arrangement being adapted in use to slide over the ground; a mole boring device rigidly supported at a working depth beneath the rear of the beam arrangement; and link means extending between an upper location in the mounting frame and a rearward location in the beam arrangement such that upon initial lifting of the tractor linkage the beam arrangement is inclined forwardly and upwardly causing the mole boring device to move toward the surface, continued lifting of the tractor linkage serving through tension in the link means to lift the beam arrangement bodily from the ground.

10.     A mole drainer according to Claim 9, wherein the link means comprises a chain which is slack when the mounting frame and beam arrangement are mutually orthogonally disposed.

11.     A method of lifting out of work a mole drainer having a mole boring device rigidly mounted beneath an elongate beam arrangement which is drawn over the ground by a tractor, comprising the steps of lifting the forward end of the beam arrangement thereby tilting the mole boring device forwardly and upwardly; continuing forward motion of the tractor until such time as the mole boring device reaches or closely approaches the surface and thereafter lifting the beam arrangement bodily from the ground.

12. An agricultural implement comprising an elongate beam arrangement adapted for pivotal connection at a forward end thereof to the lower links of a tractor three point linkage for pivotal movement relative to the tractor about a transverse axis, the beam arrangement being arranged in use to slide over the ground; tool mounting means secured to the beam arrangement. to enable different tools to be mounted on the implement and means extending in use between the beam arrangement and the tractor top link to enable lifting of the tool carrier by the tractor hydraulic system.

13. An agricultural implement according to Claim 12, wherein the beam arrangement comprises a pair of mutually spaced parallel longitudinal beams.

14. An agricultural implement according to Claim 12 or Claim 13, further comprising a tool support frame having a pair of transversely extending wings provided one each side of a central fixed portion and each hingedly connected thereto for pivotal folding movement about respective longitudinal axis into a transport position, the wings and the fixed portion each bearing at least one earth working tool.

0026097

FIG.1

FIG.2

FIG.3

FIG 4

FIG.6

FIG. 5

0026097

European Patent Office

**EUROPEAN SEARCH REPORT**

Application number

EP 80 30 3317

## DOCUMENTS CONSIDERED TO BE RELEVANT

| Category | Citation of document with indication, where appropriate, of relevant passages | Relevant to claim |
|---|---|---|
| X | <u>US - A - 3 039 541</u> (HARDEN)<br>* Entirely *<br><br>-- | 1,3,4, 5,6,7, 8,12, 13 |
| | <u>US - A - 2 956 630</u> (LABELLE)<br>* Entirely *<br><br>-- | 1 |
| | <u>FR - A - 1 073 169</u> (MINAIR)<br>* Entirely *<br><br>-- | 1,6,11 |
| | <u>US - A - 3 211 238</u> (McCLENNY)<br>* Entirely *<br><br>-- | 13,14 |
| | <u>FR - A - 2 065 638</u> (LEMKEN)<br>* Figures 5,6 *<br><br>---- | 13,14 |

**CLASSIFICATION OF THE APPLICATION (Int. Cl.³)**

A 01 B  63/02
              13/08
E 02 F   5/10

**TECHNICAL FIELDS SEARCHED (Int. Cl.³)**

A 01 B
E 02 F

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 17-12-1980 | VERDOODT |

EPO Form 1503.1   06.78